# EUROPEAN PATENT SPECIFICATION

(11) **EP 2 642 812 B1**
(45) Date of publication and mention of the grant of the patent: **28.12.2016**
(21) Application number: 12360021.5
(22) Date of filing: 19.03.2012
(51) Int. Cl.: H04W 72/04, H04B 7/04, H04B 7/06

(54) **Control signalling**
Steuerungssignalisierung
Signalisation de commande

(43) Date of publication of application: 25.09.2013
(73) Proprietor: ALCATEL LUCENT, 92100 Boulogne-Billancourt (FR)
(72) Inventor: Wong, Shin Horng, Chippenham Wiltshire SN15 3YB (GB); Baker, Matthew P.J., Canterbury Kent CT2 9DB (GB)
(74) Representative: Sarup, David Alexander

(56) References cited:
- US-A1- 2012 051 453
- ERICSSON ET AL: "On the Design of UL Control Channels for Uplink MIMO with 64QAM", 3GPP DRAFT; R1-120345, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563199, [retrieved on 2012-02-01]
- ERICSSON ET AL: "Downlink physical channel design for Uplink MIMO with 64QAM", 3GPP DRAFT; R1-120346 DOWNLINK PHYSICAL CHANNEL DESIGN FOR UPLINK MIMO WITH 64QAM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563200, [retrieved on 2012-02-01]
- ERICSSON ET AL: "Design Aspects for Uplink MIMO with 64QAM", 3GPP DRAFT; R1-120343 DESIGN ASPECTS FOR UPLINK MIMO WITH 64QAM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563197, [retrieved on 2012-02-01]
- "3rd Generation Partnership Project; Technical Specification Group Radio Access Network; Uplink MIMO for HSPA (Release 11)", 3GPP STANDARD; 3GPP TR 25.871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V2.0.0, 8 September 2011 (2011-09-08), pages 1-42, XP050553762, [retrieved on 2011-09-08]

## Description

### FIELD OF THE INVENTION

The present invention relates to a method of interpreting control channel signalling between user equipment and a base station in a multiple input multiple output wireless communication network, a base station and computer program product operable to perform that method, and a method of encoding an indication of a transmission rank being used for communication between user equipment and a base station in a multiple input multiple output wireless communication network and encoding an indication of a wish for an allocation of further transmission link resource, a computer program product and user equipment operable to perform that method.

### BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless HSPA telecommunication systems, user equipment can move between geographical base station coverage areas. Service provided to user equipment is overseen by a radio network controller (RNC). The radio network controller communicates with user equipment and base stations and determines which base station, and which cell of the geographical area served by that base station each user equipment is primarily connected to (known as the "serving cell"). Furthermore, a radio network controller acts to control and communicate with a base station and user equipment when user equipment moves from the geographical area served by one base station to a geographical area served by another base station.

Multiple-Input, Multiple-Output (MIMO) techniques may be employed within a communications system to improve reliability of communications between a base station and user equipment and to provide for an increase in data throughput in a network.

It will be appreciated that a signal transmitted between user equipment and a base station over a radio channel typically experiences many propagation paths, for example, due to reflection, before arriving at a base station receiver. Multiple-Input, Multiple-Output (MIMO) techniques include the use of transmissions made from more than one antenna provided at user equipment and base stations. Uplink MIMO requires more than one antenna to be provided at user equipment. The antenna are physically separated. A signal may be sent to a base station on one or more of those antenna(s) provided at user equipment. The signal arriving at a base station from two antennas may, assuming the received signals are not too closely correlated, be decoded by the base station and can thus result in an increase in data throughput from user equipment to the base station.

Implementing uplink MIMO within a network may lead to conflicting signaling within a network, leading to decreased overall efficiency of operation of a wireless telecommunication network.

Accordingly, it is desired to improve the efficiency of signalling within a wireless telecommunications network having uplink MIMO functionality.

"On the Design of UL Control Channels for Uplink MIMO with 64QAM" submitted by Ericsson at the 3GPP TSG RAN WG1 Meeting #68 in Dresden, Germany on 6-10 February 2012 discloses the use of the "happy bit" on the primary control channel as an indicator of rank 1 or rank 2, with the happy bit itself being moved to the secondary control channel.

### SUMMARY

According to the present invention, a method for a base station as set forth in claim 1, a computer program as set forth in claim 8, a base station as set forth in claim 9, a method for a user equipment as set forth in claim 10, a computer program as set forth in claim 11 and a user equipment as set forth in claim 12 are provided. Embodiments of the invention are claimed in the dependent claims.

A first aspect provides a method of interpreting control channel signalling between user equipment and a base station in a multiple input multiple output wireless communication network, the method comprising: determining a maximum transmission rank for communication of data between the user equipment and the base station; communicating the determined maximum transmission rank to the user equipment; receiving a control channel signalling transmission from the user equipment comprising a single bit; interpreting from the single bit and said maximum transmission rank a transmission rank being used for communication of data between the user equipment and the base station; and,

if the transmission rank being used for communication of data between the user equipment and the base station is interpreted as being greater than one, interpreting from a further single bit of the control channel signalling from the user equipment

whether the user equipment wishes for an allocation of further transmission link resources.

The first aspect recognizes that uplink MIMO is a method according to which a signal from user equipment can be transmitted over two or more antennas, and that method may allow for improved communication between user equipment and a base station by offering a chance to increase overall uplink data throughput by transmitting more than one data stream.

It will be appreciated that even if user equipment is provided with two or more transmission antennas, it may not be operable to make use of all its available transmit antennas. A base station needs to be able to separate signals being sent by user equipment on more than one antenna but using the same uplink resource (frequency time and code) in order for MIMO transmissions from that user equipment to be successfully received and decoded.

MIMO is a multi-dimensional technology which increases wireless spectrum utilization by a factor equivalent to the number of transmit streams (also known as MIMO rank). MIMO controls in a linear system are typically described by a matrix. The rank of the matrix is the number of independent rows or columns. It will be understood that being rank deficient in a MIMO system can cause problems (ie, the base station may be unable to decode the plurality of MIMO streams being sent by a single UE) in a control system, and it is most efficient for the overall operation of the network if it is possible to utilize full MIMO rank.

For example, if a user equipment is able to transmit two streams of E-DCH (Enhanced Dedicated Channel) packets in the uplink using the same uplink resource (frequency, time and code) that user equipment is capable of performing up to a rank 2 transmission. It will be understood that a single E-DCH stream from a single antenna would be considered to be a rank 1 transmission.

The data streams, for example, E-DCH, transmitted by a user equipment typically comprise one or more E-DPDCH (E-DCH Dedicated Physical Data Channel) channels and one E-DPCCH (E-DCH Dedicated Physical Control Channel). The E-DPDCH carry data traffic and the E-DPCCH carries information to allow decoding of the E-DPDCH. If user equipment is operable to transmit more than one E-DCH, then a secondary E-DCH stream is sent together with the primary E-DCH stream. Similar to the primary E-DCH, the secondary E-DCH will typically comprise one or more secondary E-DPDCH (S-E-DPDCH) and one secondary E-DPCCH (S-E-DPCCH). It will be understood that for each antenna the user equipment is also operable to send a pilot channel; in this instance, primary and secondary pilots respectively are referred to as DPCCH and S-DPCCH.

The information carried on a control channel, for example, E-DPCCH, comprises an E-DCH transport format indicator, which indicates transport block size, modulation and coding used on E-DPDCHs, together with a retransmission sequence number for HARQ processes and a so-called "Happy Bit". That control channel information is used by a base station to assist decoding of data carried on a dedicated data traffic channel.

The happy bit is used by a base station to determine whether a user equipment is happy or otherwise with current allocated uplink resource. If the Happy Bit is set to zero, the user equipment is indicating, via signaling to the network, that it would like to be able to transmit at a higher rate than has currently been granted by the network. Conversely, if the Happy Bit is set to 1, the user equipment is indicating that it is happy with its current level of resource grant.

In order to implement MIMO operation, a base station is operable to evaluate uplink radio condition being experienced by MIMO-capable user equipment and determine whether the user equipment might be a suitable candidate to transmit, for example, using rank 1 or rank 2. The rank determined at a base station can be signaled to the MIMO-capable user equipment. MIMO-capable user equipment is then operable to evaluate whether, based on its own parameters, it is able to transmit using the maximum rank indicated by the base station or whether, given the radio condition and resource allocation made by the network to that user equipment, it is more efficient to operate to support transmissions at a lower rank than the maximum indicated by the base station.

For example, the user equipment may evaluate whether it has sufficient power to transmit in rank 2. It may, for example, evaluate that a higher output may be achieved using only a single antenna and thus only rank 1 streaming. Thus, it will be appreciated that the rank indicated by a base station to user equipment represents a maximum rank on which the user equipment may transmit. Since MIMO-capable user equipment is typically operable to select a rank unilaterally on which to transmit, base stations receiving transmissions from that user equipment may, at least at first, be unaware of the nature of transmissions made by that user equipment. In particular, if a base station signalled a rank greater than 1 to user equipment, that base station may be unaware of the number of E-DCH streams (that is to say, rank) that the user equipment has selected for transmission. For a maximum rank indication greater than 1, a base station may have to blind decode a secondary stream or more than one secondary stream, which may lead to an increase in hardware complexity and false detection at a base station. Thus, it is beneficial for user equipment to somehow indicate back to a base station the nature of its transmissions and, in particular, the rank being used for those transmissions.

It will be understood that the first aspect aims to find a method to indicate rank used by user equipment within a MIMO-capable network and, in particular, in relation to its uplink MIMO transmissions, without increasing uplink control signaling overheads within a network. The first aspect recognizes that a single bit may be used to offer an indication of rank to the network and that, for example, the existing happy bit in control signaling may be used for that purpose. It will be appreciated that any available single bit may be used to indicate rank being used to the base station, and it need not be the happy bit in some embodiments. Use of a single bit offers a means to implement efficient network signaling of rank information.

Furthermore, the first aspect recognizes that in the event that the rank used by MIMO capable user equipment is greater than one, the first aspect recognizes that it is helpful for the network to be aware of whether the user equipment is "happy" or "unhappy" with its current uplink resource allocation, so that steps may be taken to further improve overall network operation where possible. Use of a further single bit, offers a means to implement efficient network signaling of information relating to how happy or otherwise user equipment is with its current uplink resource allocation.

Aspects described herein make the interpretation of the Happy Bit field on a primary control channel (E-DPCCH) dependent upon the rank indicated by a base station to user equipment. Accordingly, aspects comprise methods according to which user equipment is operable to transmit an indicator of the rank of a data transmission from that user equipment. The method comprises transmission of a single bit and that single bit is used in differing ways independent of what has been indicated to the user equipment by a base station. If a base station indicates to user equipment that the user equipment may only transmit data using a rank 1 regime, the single bit sent by user equipment to a base station may comprise an indication of whether that user equipment could use more transmission resource or would like more transmission resource. In the case where a base station indicates to user equipment that the user equipment may transmit data using a rank 2 or greater transmission regime, the single bit transmitted by user equipment back to a base station may offer an indication of whether the user equipment is transmitting data according to a rank 1 or rank 2 regime.

In one embodiment, the single bit is transmitted on a primary data stream. Accordingly, irrespective of rank being used by the user equipment, the base station receives information indicative of the rank transmission regime being used by user equipment, thereby limiting the need for a base station to blindly decode received transmissions from user equipment.

In one embodiment, the further single bit is transmitted on a secondary data stream. Accordingly, if it is determined that user equipment is using a non-rank 1 MIMO uplink transmission regime, a single bit provided on a secondary channel may be used to indicate to the network whether user equipment is happy with its uplink resource allocation, thus allowing the network to take steps to optimise overall network operation where possible.

In one embodiment, the control channel signalling comprises an E-DPCCH. Accordingly, re-use of existing control signalling can ensure minimised changes to expected protocols within a wireless communications network.

In one embodiment, the single bit comprises a happy bit. In one embodiment, the further single bit comprises a happy bit. The Happy Bit is used by user equipment to indicate to the network, and in particular via its serving base station, whether it would like to be able to transmit at a higher rate than it has currently been granted, or whether it is happy with its current level of uplink resource grant. If the Happy Bit is set to zero, it is indicative that the user equipment would ideally like to be able to transmit at a higher rate than has currently been granted by a base station, whereas if the Happy Bit is set to 1, the user equipment is indicating that it is happy with its current rate of grant. In some embodiments, rather than use a happy bit to indicate happiness, the happy bit is reused to indicate rank.

According to some embodiments, the method further comprises: receiving a control channel signalling transmission from said user equipment comprises receiving a single bit and at least one additional bit, and interpreting from said single bit and said at least one additional bit, a transmission rank being used for communication of data between said user equipment and said base station. It will be appreciated that aspects and embodiments described herein may be extended to be used in MIMO networks in which a rank greater than 2 is available. For example, a single bit, for example, the Happy Bit field in a secondary E-DPCCH, on each available secondary channel may be reinterpreted depending on a maximum rank initially indicated to user equipment. For example, if a base station indicates to user equipment a transmission regime in which a maximum rank of 3 is available, the Happy Bit field in the primary stream (E-DPCCH) may indicate to a base station whether user equipment is using a rank 1 transmission regime or a rank greater than 1 transmission regime. In such a case, the Happy Bit field in a first secondary E-DPCCH can be used to indicate to a base station whether the user equipment is using a rank 2 or a rank greater than 2. If the base station indicates to a user equipment that it may use a transmission regime having a rank greater than 2 and that user equipment decides to use rank 2, then this implicitly means that the user equipment is happy. For a maximum rank of 3 a bit carried on the third stream, for example the happy bit field of the E-DPCCH in the third stream, may be used to indicate whether or not the user equipment is happy or not happy.

A second aspect provides a computer program product operable, when executed on a computer, to perform the method of the first aspect.

A third aspect provides a base station operable to interpret control channel signalling between user equipment and the base station in a multiple input multiple output wireless communication network, the base station comprising:
rank determination logic operable to determine a maximum transmission rank for communication of data between the user equipment and the base station;
rank communication logic operable to communicate the determined maximum transmission rank to the user equipment;
reception logic operable to receive a control channel signalling transmission from the user equipment comprising a single bit;
interpretation logic operable to interpret, from the single bit and said maximum transmission rank, a transmission rank being used for communication of data between the user equipment and the base station; and,
if the transmission rank being used for communication of data between the user equipment and the base station is interpreted as being greater than one, interpret from a further single bit of the control channel signalling from the user equipment whether the user equipment wishes for an allocation of further transmission link resources.

In one embodiment, the single bit is transmitted on a primary data stream.

In one embodiment, the further single bit is transmitted on a secondary data stream.

In one embodiment, the control channel signalling comprises an E-DPCCH.

In one embodiment, the single bit comprises a happy bit. In one embodiment, the further single bit comprises a happy bit.

A fourth aspect provides a method of encoding an indication of a transmission rank being used for communication between user equipment and a base station in a multiple input multiple output wireless communication network and encoding an indication of a wish for an allocation of further transmission link resource, the method comprising: receiving an indication of a maximum transmission rank for communication of data between the user equipment and said base station; assessing an allocation of transmission link resource; encoding in dependence upon said maximum rank an indication of transmission rank to be used for communication of data between the user equipment and the base station in control channel signalling comprising a single bit; and if the transmission rank to be used for communication of data between the user equipment and the base station is greater than one, encoding whether the user equipment wishes for an allocation of further transmission link resource in control channel signalling comprising a further single bit; and communicating the single bit and the further bit to the base station.

The fourth aspect recognises that user equipment may be operable to provide a base station with useful information relating to the manner in which it is to transmit data traffic in a MIMO capable network. By encoding and transmitting information about the nature of its transmissions, introduction of unnecessary hardware and computational complexity at a base station may be avoided. The user equipment may be operable to determine, given its current radio condition and uplink resource allocation, whether it can make use of a maximum rank uplink transmission regime indicated by a base station, or whether the full maximum rank indicated by a base station as being available would be unsuitable for transmission. Once user equipment has made that determination, based on predetermined criteria, for example, a suitable look up table, it will unilaterally decide an uplink MIMO transmission regime within the parameters set by the network. The fourth aspect provides a method by which information is provided to a base station to aid the decoding of user equipment transmissions by that base station.

According to one embodiment, the single bit is transmitted on a primary data stream.

According to one embodiment, the further single bit is transmitted on a secondary data stream.

According to one embodiment, the control channel signalling comprises an E-DPCCH.

According to one embodiment, the single bit comprises a happy bit.

According to one embodiment, the further single bit comprises a happy bit.

A fifth aspect provides a computer program product operable, when executed on a computer, to perform the method of the fourth aspect.

A sixth aspect provides user equipment operable to encode an indication of a transmission rank being used for communication between user equipment and a base station in a multiple input multiple output wireless communication network and encode an indication of a wish for an allocation of further transmission link resource, the user equipment comprising: reception logic operable to receive an indication of a maximum transmission rank for communication of data between the user equipment and the base station; assessment logic operable to assess an allocation of transmission link resource; encoding logic operable to encode in dependence upon said maximum rank an indication of transmission rank to be used for communication of data between the user equipment and the base station in control channel signalling comprising a single bit; and if the transmission rank to be used for communication of data between the user equipment and the base station is greater than one, to encode whether the user equipment wishes for an allocation of further transmission link resource in control channel signalling comprising a further single bit; and communication logic operable to communicate the single bit and the further bit to the base station.

In one embodiment, the single bit is transmitted on a primary data stream.

In one embodiment, the further single bit is transmitted on a secondary data stream.

In one embodiment, the control channel signalling comprises an E-DPCCH.

In one embodiment, the single bit comprises a happy bit.

In one embodiment, the further single bit comprises a happy bit.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates a wireless telecommunications system according to one embodiment;
Figure 2 illustrates schematically typical propagation paths between a transmitter and a receiver;
Figure 3 illustrates schematically an implementation of uplink MIMO at user equipment according to one embodiment;
Figure 4 illustrates schematically a control message format for transmission on an E-DPCCH; and
Figure 5 is a flowchart illustrating schematically interpretation of a Happy Bit field in control messaging according to one embodiment.

### DETAILED DESCRIPTION OF THE DRAWINGS

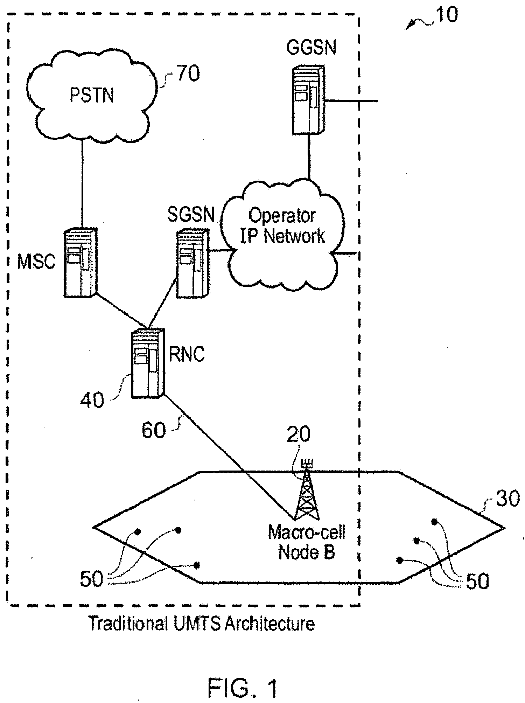

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as, for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

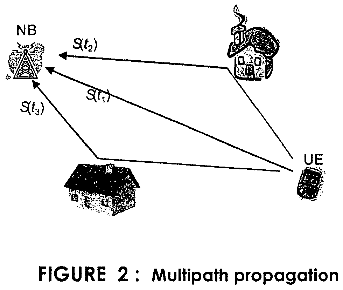

Figure 2 illustrates schematically typical propagation paths between a transmitter, in this case, user equipment 50 and a receiver on a base station 20. A signal transmitted over a radio channel typically experiences many propagation paths, for example, due to reflection, before arriving at a receiver. Those signal paths are represented as *S*(*t*₁), *S*(*t*₂), and *S*(*t*₃) in Figure 2, and each arrive at different time, power and phase at the receiver. Changes to the transmitter position or the transmitter surroundings causes the multiple propagation path signals to change, leading to fluctuation in the signal at the receiver. A base station can decode different MIMO data streams carried on a radio channel provided that they transmitted by spatially separate antenna and provided the streams are not too well correlated by the time they reach the base station.

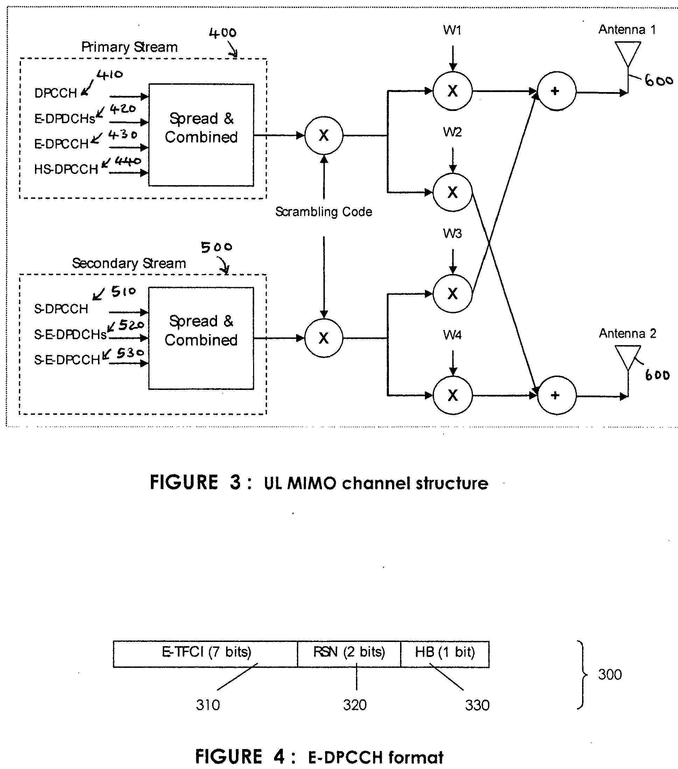

Figure 3 illustrates schematically an example implementation of MIMO uplink techniques at a user equipment having two transmit antennas. In the structure illustrated in Figure 3, user equipment is operable to transmit a primary stream 400 and a secondary stream 500. The primary stream comprises a pilot channel (DPCCH 410), Dedicated Physical Data Channels 420, control channels 430 and a downlink feedback channel 440. The secondary stream 500 comprises a pilot channel 510, Dedicated Physical Data Channels 520 and control channels 530. The weights W1, W2, W3 and W4 are pre-coding weights signaled by a base station to user equipment to ensure effective MIMO transmissions from antenna 600.

More than one stream of information can be sent using the same time frequency and code resource in MIMO if the paths taken by the streams received by a base station are uncorrelated. Streams of data sent by user equipment are likely to experience different gains (that is to say, different Eigen values of a MIMO channel matrix). For an uplink MIMO case operating according to a transmission scenario in which two streams are supported, the primary stream is decoded usually with a higher gain than that of the secondary stream; that is to say, the primary stream is often better received than the secondary stream. As a result, the primary stream is usually selected as the stream which also contains other essential control channels (for example, downlink feedback information).

In order to operate an uplink MIMO (Multiple Input, Multiple Output), user equipment is able to transmit two or more streams of E-DCH (Enhanced Dedicated Channel) in the uplink using the same uplink resource. That is to say, the uplink resource allocated to the user equipment uses the same frequency, time and code that is spatially separated by transmission on two or more different antenna. As a result, user equipment is capable of performing what is known as a "rank 2" transmission. A single E-DCH stream would be referred to as a "rank 1" transmission.

Traditionally, an E-DCH transport channel is structured such that E-DCH transport channel data is carried on one or more E-DPDCHs (E-DCH Dedicated Physical Data Channels) and associated control signaling is carried on an E-DPCCH (E-DCH Dedicated Physical Control Channel). The information carried on the Dedicated Physical Control Channel comprises an E-DCH transport format indicator which indicates transport block size, modulation and coding used on the Dedicated Physical Data Channels, a retransmission sequence number which is used in HARQ processes, and a "Happy Bit".

The Happy Bit is used by user equipment to indicate to the network, and in particular via its serving base station, whether it would like to be able to transmit at a higher rate than it has currently been granted, or whether it is happy with its current level of uplink resource grant. If the Happy Bit is set to zero, it is indicative that the user equipment would ideally like to be able to transmit at a higher rate than has currently been granted by a base station, whereas if the Happy Bit is set to 1, the user equipment is indicating that it is happy with its current rate of grant.

If user equipment is operable to support uplink MIMO, a second E-DCH stream is carried on a secondary E-DPDCH (S-E-DPDCH) and a new control channel is introduced to carry corresponding control information, namely a secondary E-DPCCH. It will be understood that the S-E-DPDCCH and S-E-DPCCH have similar functions to those of the E-DPDCH and E-DPCCH provided on a primary stream.

If a base station and user equipment are configured such that they can support MIMO operation, a base station is operable to evaluate uplink radio condition at user equipment and determine whether that user equipment is a suitable candidate to transmit on according to a rank 1 or rank 2 (or greater) signaling regime. That maximum determined rank is usually signaled to the user equipment by the base station.

At the user equipment, the user equipment is operable to evaluate whether it is able to utilize its full rank or whether network conditions are such that the signaled maximum rank indication received from a base station is not possible and a lower rank transmission is more appropriate. For example, user equipment may evaluate whether it has sufficient power to transmit using the maximum indicated rank (in this case, rank 2), or whether a higher overall throughput may be achieved by simply using rank 1 signaling. Thus, a rank indicated by a base station to user equipment represents a maximum rank on which user equipment may be allowed to transmit within the network.

It will be appreciated that since the user equipment is operable to unilaterally select a rank on which to perform data transmissions, irrespective of whether the base station signaled a rank greater than 1, that base station will not know whether that maximum rank has been utilized by user equipment and will not know the number of E-DCH streams upon which the user equipment will actually transmit. For a maximum rank greater than 1 without knowing the rank chosen by user equipment, a base station may be in a position to blind de-code secondary streams. Such a need to de-code secondary streams can lead to a hardware complexity and, in some circumstances, possibly false detection of multiple E-DCH streams. Thus, it is beneficial for user equipment to indicate to a network as a whole, and in particular a base station, the rank being used for transmissions.

Aspects described herein relate to a method to indicate rank used by user equipment in uplink MIMO transmissions whilst not increasing uplink control signaling overheads. It has been appreciated that the rank according to which user equipment is transmitting may be indicated to a base station by reinterpreting the already available "Happy Bit" in the E-DPCCH. That is to say, the Happy Bit field in the primary E-DPCCH is used by user equipment to indicate the rank being used by user equipment and information usually carried on the Happy Bit is moved to the secondary control channel; that is to say, the S-E-DPCCH. Such a solution is not without issues. It will be appreciated that a user equipment transmitting using a rank 1 configuration does not transmit a secondary stream and, thus, does not transmit a secondary control channel. That user equipment is therefore unable to indicate whether it is happy or unhappy. That is to say, the Happy Bit is lost in rank 1 transmissions, since no secondary control channel is available to the user equipment. If it is determined that Happy Bit information is required in order to optimize overall network operation, the secondary control channel will need to be sent at all times, even when there is no corresponding secondary stream data to be sent in a secondary stream.

Aspects described herein make the interpretation of the Happy Bit field on a primary control channel (E-DPCCH) dependent upon the rank indicated by a base station to user equipment. Accordingly, aspects comprise methods according to which user equipment is operable to transmit an indicator of the rank of a data transmission from that user equipment. The method comprises transmission of a single bit and that single bit is used in differing ways independent of what has been indicated to the user equipment by a base station. If a base station indicates to user equipment that the user equipment may only transmit data using a rank 1 regime, the single bit sent by user equipment to a base station may comprise an indication of whether that user equipment could use more transmission resource or would like more transmission resource. In the case where a base station indicates to user equipment that the user equipment may transmit data using a rank 2 or greater transmission regime, the single bit transmitted by user equipment back to a base station may offer an indication of whether the user equipment is transmitting data according to a rank 1 or rank 2 regime.

According to some embodiments, the user equipment may receive from a base station an indication that it may transmit according to a rank 2 or greater regime. In the event that the user equipment determines that it wishes to use its full allocated rank transmission regime, it may be operable to indicate to the network as a whole, and to a base station in particular, that its data transmission regime is rank 2 or greater. In such a scenario, an additional bit may be transmitted. That additional bit may comprise an indication of whether the user equipment wishes to use further transmission resources; that is to say, the additional bit may be used as a Happy Bit. If, however, the user equipment indicates that the rank of data to be transmitted from the user equipment is 1, rather than any greater rank, any such additional bit indicating happiness or otherwise of user equipment is then not transmitted.

Aspects described recognize that the signaling overhead associated with indicating a transmitted rank or user equipment rank transmission regime can be reduced by taking account of a maximum rank on which a device (for example, user equipment) has been allocated on which to transmit. Aspects recognize that if user equipment is permitted to transmit on a higher rank than it actually chooses to transmit, the signaling regime ought to include a possibility of indicating whether or not any given user equipment could use more transmission resource.

In some embodiments, the single bit used by user equipment in order to indicate the rank on which the rank regime according to which user equipment is transmitted comprises the "Happy Bit" on an E-DPCCH. That is to say, it comprises a single bit on a primary stream data control channel. Furthermore, according to some embodiments, the additional bits used by user equipment in order to indicate whether or not it is happy or otherwise with allocated resource comprises the standard "Happy Bit" provided on, for example, a control channel provided on the secondary E-DPCH; that is to say, the Happy Bit provided on the S-E-DPCCH. It will be appreciated that the S-E-DPCCH is transmitted only if the data transmission on E-DPDCH is rank 2 or greater; that is to say, if data streams are transmitted on both primary and secondary channels.

Figure 4 illustrates schematically a control message format for transmission on an E-DPCCH. The control message 300 generally comprises seven bits allocated to E-TFCI signaling 310, two bits for Retransmission Sequence Number (RSN) signaling 320 and one bit as a Happy Bit 330. The E-TFCI 410 indicates the transport block size used for the corresponding E-DPDCH and the RSN indicates the *n*^{th} HARQ retransmission of the corresponding E-DPDCH. The Happy Bit 330 indicates whether the user equipment would benefit from having more uplink resource where a value of 1 indicates that the user equipment is happy with current uplink resource, whilst a value of zero indicates that the user equipment is not happy with the current resource and would benefit from having more.

The control message format for transmission on a secondary MIMO channel is expected to be analogous to that shown in Figure 4. That is to say, the S-E-DPCCH would typically contain the same fields as that shown in Figure 4.

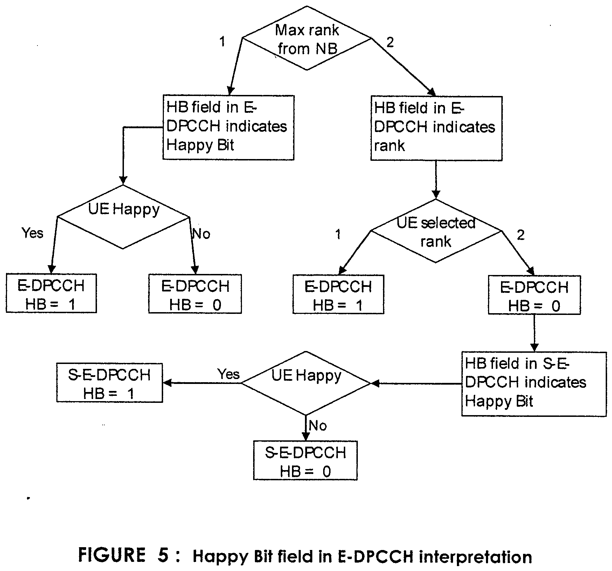

Figure 5 is a flowchart illustrating schematically interpretation of a Happy Bit field in control messaging according to one embodiment.

If a base station indicates to user equipment that its maximum rank is to be 1, the Happy Bit field in E-DPCCH messaging sent by user equipment to a base station will be interpreted by the base station as a Happy Bit. That is to say, the legacy interpretation of the control message signaling, and in particular the Happy Bit in existing E-DPCCH control messaging, applies.

If the maximum rank indicated by a base station to user equipment is 2, the Happy Bit field in the E-DPCCH signaling is to be interpreted by a base station as a rank indicator. Although user equipment is unable to signal Happy Bit information if it determines that it will actually transmit using rank 1 regimes, the Happy Bit information would be redundant in such a case since the user equipment is obviously happy with available resource. That is to say, if it transmits using rank 1 despite being allowed to transmit using rank 2, it is implicitly happy with available uplink resource allocated to it. In other words, the user equipment has an option to transmit at a higher data rate by using rank 2 transmission regimes, but it decides to use a lower data rate which indicates that it is already happy with current available uplink resource. Thus, a rank 1 transmission, in such a case where the maximum rank indicated to the user equipment by a base station is 2, implicitly applies that the user equipment is happy. The value of the Happy Bit field is set to 1 which indicates to the base station that it is making a rank 1 transmission and that the user equipment is happy. It is of course possible to use an alternative value to indicate rank in the Happy Bit field.

If the user equipment transmits using rank 2, the Happy Bit field in the E-DPCCH control message is set to zero. A rank 2 transmission indicates the presence of a secondary stream, including a secondary control channel message (S-E-DPCCH). In the case where a base station has indicated to user equipment that it may use a maximum of rank 2 signaling procedures, and the user equipment determines that it will use the maximum available transmission regime, the user equipment sets the Happy Bit field in its primary stream to zero. If a base station receives a zero in the Happy Bit field, it knows that there is a secondary stream and that the Happy Bit field in the secondary stream can be used to determine whether the user equipment is happy or not happy.

It will be appreciated that aspects described herein may be extended to be used in MIMO networks in which a rank greater than 2 is available. In particular, the Happy Bit field in a secondary E-DPCCH may be reinterpreted depending on maximum rank. For example, if a base station indicates to user equipment a transmission regime in which a maximum rank of 3 is available, the Happy Bit field in the primary stream (E-DPCCH) indicates to a base station whether user equipment is using a rank 1 transmission regime or a rank greater than 1 transmission regime. In such a case, the Happy Bit field in a secondary E-DPCCH can be used to indicate to a base station whether the user equipment is using a rank 2 or a rank greater than 2. Analogous to the rank 2 case described in relation to Figure 5, if the base station indicates to a user equipment that it may use a transmission regime having a rank greater than 2 and that user equipment decides to use rank 2, then this implicitly means that the user equipment is happy. For a maximum rank of 3 the Happy Bit field of the E-DPCCH in the third stream (for example, the control message signaling sent on the third stream) is used to indicate whether or not the user equipment is happy or not happy.

### Example 1

A first user equipment is capable of operating in an uplink MIMO mode. Based on the reporter user equipment radio condition, a base station indicates to that user equipment that it can transmit using a rank 2 transmission regime and thus signals a maximum rank of 2 to user equipment.

If the user equipment decides that it does not have sufficient transmit power to operate two E-DCH streams it therefore decides to transmit using a rank 1 transmission regime. As a result, the user equipment sets the Happy Bit field to 1 in the E-DPCCH and indicates that it is transmitting to 1. This indicates to a base station that it is transmitting using a rank 1 transmission regime and also that it is happy. At the base station, since a Happy Bit field is equal to 1 on the primary stream, the base station realises that it need not de-code any secondary streams.

### Example 2

For a user equipment which is capable of operating in uplink MIMO according to an uplink MIMO mode, it may be signalled to by a base station. Based on the radio condition being experienced by the user equipment, a base station determines that the user equipment may be operable to transmit using a rank 2 transmission regime and therefore signals to the user equipment that a maximum rank of 2 is available. The user equipment is operable to decide whether it is capable of transmitting using the maximum available rank. In this case, the user equipment determines that it has available transmit power and can send a secondary stream. Further, in this example the user equipment may decide that it can benefit from more uplink resource (ie, that it is not happy). The Happy Bit fields in the control messaging on the primary and secondary streams are thus set as follows: the Happy Bit field on the primary stream control message is set to zero and the Happy Bit field in the secondary control channel message is also set to zero.

A base station receives a Happy Bit equal to zero on the primary stream and realises that the user equipment is using a rank 2 transmission regime. Thus, it is also operable to decode the secondary control channel message and can determine the transport block size of the corresponding secondary stream from the secondary control channel messaging without the need to blindly decode. The control messaging on the secondary stream also includes a Happy Bit field which, since it is aware that the user equipment is transmitting using a rank 2 regime, it can interpret as a Happy Bit and, in this case since it is set to zero, the base station becomes aware that the user equipment is not happy.

Aspects allow user equipment to indicate the rank being used for uplink MIMO transmissions together with whether it is happy or unhappy with current uplink resource allocations. That indication is possible using existing control channel signalling formats.

Being able to indicate a rank being used by user equipment to a base station can be beneficial to reduce hardware complexity at a base station. The method described here does not require changes to the existing physical channel and, thus, other overheads associated with changes can be reduced.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a base station of interpreting control channel signalling between user equipment and the base station of a multiple input multiple output wireless communication network,
said method comprising:
determining a maximum transmission rank for communication of data between said user equipment and said base station;
communicating said determined maximum transmission rank to said user equipment;
receiving a control channel signalling transmission from said user equipment comprising a single bit;
interpreting from said single bit and said maximum transmission rank a transmission rank being used for communication of data between said user equipment and said base station; and,
if said transmission rank being used for communication of data between said user equipment and said base station is interpreted as being greater than one, interpreting from a further single bit of said control channel signalling from said user equipment whether said user equipment wishes for an allocation of further transmission link resources.

2. A method according to claim 1, wherein said single bit is transmitted on a primary data stream.

3. A method according to any preceding claim, wherein said further single bit is transmitted on a secondary data stream.

4. A method according to any preceding claim, wherein said control channel signalling comprises an E-DPCCH.

5. A method according to any preceding claim, wherein said single bit comprises a happy bit.

6. A method according to any preceding claim, wherein said further single bit comprises a happy bit.

7. A method according to any preceding claim, wherein receiving a control channel signalling transmission from said user equipment comprises receiving a single bit and at least one additional bit, and interpreting from said single bit and said at least one additional bit, a transmission rank being used for communication of data between said user equipment and said base station.

8. A computer program product operable, when executed on a computer, to perform the method of any one of claims 1 to 7.

9. A base station (20) operable to interpret control channel signalling between user equipment (50) and said base station (20) of a multiple input multiple output wireless communication network (10), said base station (20) comprising:
rank determination logic operable to determine a maximum transmission rank for communication of data between said user equipment and said base station;
rank communication logic operable to communicate said determined maximum transmission rank to said user equipment;
reception logic operable to receive a control channel signalling transmission from said user equipment comprising a single bit;
interpretation logic operable to interpret, from said single bit and said maximum transmission rank, a transmission rank being used for communication of data between said user equipment and said base station; and,
if said transmission rank being used for communication of data between said user equipment and said base station is interpreted as being greater than one, interpret from a further single bit of said control channel signalling from said user equipment whether said user equipment wishes for an allocation of further transmission link resources.

10. A method for a user equipment of encoding an indication of a transmission rank being used for communication between said user equipment and a base station of a multiple input multiple output wireless communication network and encoding an indication of a wish for an allocation of further transmission link resource, said method comprising:
receiving an indication of a maximum transmission rank for communication of data between said user equipment and said base station;
assessing an allocation of transmission link resource;
encoding an indication of transmission rank in dependence upon said maximum rank to be used for communication of data between said user equipment and said base station in control channel signalling comprising a single bit;
and if said transmission rank to be used for communication of data between said user equipment and said base station is greater than one, encoding whether said user equipment wishes for an allocation of further transmission link resource in control channel signalling comprising a further single bit; and
communicating said single bit and said further bit to said base station.

11. A computer program product operable, when executed on a computer, to perform the method of claim 10.

12. User equipment (50) operable to encode an indication of a transmission rank being used for communication between said user equipment (50) and a base station (20) of a multiple input multiple output wireless communication network (10) and encode an indication of a wish for an allocation of further transmission link resource, said user equipment comprising:
reception logic operable to receive an indication of a maximum transmission rank for communication of data between said user equipment and said base station;
assessment logic operable to assess an allocation of transmission link resource;
encoding logic operable to encode in dependence upon said maximum rank an indication of transmission rank to be used for communication of data between said user equipment and said base station in control channel signalling comprising a single bit;
and if said transmission rank to be used for communication of data between said user equipment and said base station is greater than one, to encode whether said user equipment wishes for an allocation of further transmission link resource in control channel signalling comprising a further single bit; and
communication logic operable to communicate said single bit and said further bit to said base station.

## Patentansprüche

1. Verfahren für eine Basisstation zum Interpretieren einer Steuerungskanalsignalisierung zwischen einem Teilnehmergerät und der Basisstation eines drahtlosen Multiple-Input-Multiple-Output-Kommunikationsnetzwerks, wobei das besagte Verfahren Folgendes umfasst:
Bestimmen eines maximalen Übertragungsrangs für die Kommunikation von Daten zwischen dem besagten Teilnehmergerät und der besagten Basisstation;
Mitteilen des besagten bestimmten maximalen Übertragungsrangs an das besagte Teilnehmergerät;
Empfangen einer Steuerungskanalsignalisierungsübertragung von dem besagten Teilnehmergerät, umfassend ein Einzelbit;
Interpretieren, aus dem besagten Einzelbit und dem besagten maximalen Übertragungsrang, eines Übertragungsrangs, der für die Kommunikation von Daten zwischen dem besagten Teilnehmergerät und der besagten Basisstation verwendet wird; und,
wenn der besagte Übertragungsrang, der für die Kommunikation von Daten zwischen dem besagten Teilnehmergerät und der besagten Basisstation verwendet wird, als größer als eins interpretiert wird, Interpretieren aus einem weiteren Einzelbit der besagten Steuerungskanalsignalisierung von dem besagten Teilnehmergerät, ob sich das besagte Teilnehmergerät eine Zuweisung von weiteren Übertragungsverbindungsressourcen wünscht.

2. Verfahren nach Anspruch 1, wobei das besagte Einzelbit auf einem primären Datenstrom übertragen wird.

3. Verfahren nach einem beliebigen vorstehenden Anspruch, wobei das besagte weitere Einzelbit auf einem sekundären Datenstrom übertragen wird.

4. Verfahren nach einem beliebigen vorstehenden Anspruch, wobei die besagte Steuerungskanalsignalisierung einen E-DPCCH umfasst.

5. Verfahren nach einem beliebigen vorstehenden Anspruch, wobei das besagte Einzelbit ein Happy-Bit umfasst.

6. Verfahren nach einem beliebigen vorstehenden Anspruch, wobei das besagte weitere Einzelbit ein Happy-Bit umfasst.

7. Verfahren nach einem beliebigen vorstehenden Anspruch, wobei das Empfangen einer Steuerungskanalsignalisierungsübertragung von dem besagten Teilnehmergerät das Empfangen eines Einzelbits und mindestens eines zusätzlichen Bits und das Interpretieren, aus dem besagten Einzelbit und dem besagten mindestens einen zusätzlichen Bit, eines Übertragungsrangs umfasst, der für die Kommunikation von Daten zwischen dem besagten Teilnehmergerät und der besagten Basisstation verwendet wird.

8. Computerprogrammprodukt, das betriebsfähig ist, um bei Ausführung auf einem Computer das Verfahren nach einem beliebigen der Ansprüche 1 bis 7 durchzuführen.

9. Basisstation (20), die betriebsfähig ist zum Interpretieren einer Steuerungskanalsignalisierung zwischen einem Teilnehmergerät (50) und der besagten Basisstation (20) eines drahtlosen Multiple-Input-Multiple-Output-Kommunikationsnetzwerks (10), wobei die besagte Basisstation (20) Folgendes umfasst:
Rangbestimmungslogik, die betriebsfähig ist zum Bestimmen eines maximalen Übertragungsrangs für die Kommunikation von Daten zwischen dem besagten Teilnehmergerät und der besagten Basisstation;
Rangmitteilungslogik, die betriebsfähig ist zum Mitteilen des besagten bestimmten maximalen Übertragungsrangs an das besagte Teilnehmergerät;
Empfangslogik, die betriebsfähig ist zum Empfangen einer Steuerungskanalsignalisierungsübertragung von dem besagten Teilnehmergerät, umfassend ein Einzelbit;
Interpretationslogik, die betriebsfähig ist zum Interpretieren, aus dem besagten Einzelbit und dem besagten maximalen Übertragungsrang, eines Übertragungsrangs, der für die Kommunikation von Daten zwischen dem besagten Teilnehmergerät und der besagten Basisstation verwendet wird; und,
wenn der besagte Übertragungsrang, der für die Kommunikation von Daten zwischen dem besagten Teilnehmergerät und der besagten Basisstation verwendet wird, als größer als eins interpretiert wird, Interpretieren aus einem weiteren Einzelbit der besagten Steuerungskanalsignalisierung von dem besagten Teilnehmergerät, ob sich das besagte Teilnehmergerät eine Zuweisung von weiteren Übertragungsverbindungsressourcen wünscht.

10. Verfahren für ein Teilnehmergerät zum Codieren einer Angabe eines Übertragungsrangs, der für die Kommunikation zwischen dem besagten Teilnehmergerät und einer Basisstation eines drahtlosen Multiple-Input-Multiple-Output-Kommunikationsnetzwerks verwendet wird, und Codieren einer Angabe eines Wunsches nach einer Zuweisung von weiteren Übertragungsverbindungsressourcen, wobei das besagte Verfahren Folgendes umfasst:
Empfangen einer Angabe eines maximalen Übertragungsrangs für die Kommunikation von Daten zwischen dem besagten Teilnehmergerät und der besagten Basisstation;
Bewerten einer Zuweisung von Übertragungsverbindungsressourcen;
Codieren einer Angabe eines Übertragungsrangs in Abhängigkeit von dem besagten maximalen Rang, der für die Kommunikation von Daten zwischen dem besagten Teilnehmergerät und der besagten Basisstation in der Steuerungskanalsignalisierung, umfassend ein Einzelbit, zu verwenden ist;
und wenn der besagte Übertragungsrang, der für die Kommunikation von Daten zwischen dem besagten Teilnehmergerät und der besagten Basisstation zu verwenden ist, größer als eins ist, Codieren, ob sich das besagte Teilnehmergerät eine Zuweisung von weiteren Übertragungsverbindungsressourcen in der Steuerungskanalsignalisierung, umfassend ein weiteres Einzelbit, wünscht; und
Mitteilen des besagten Einzelbits und des besagten weiteren Bits an die besagte Basisstation.

11. Computerprogrammprodukt, das betriebsfähig ist, um bei Ausführung auf einem Computer das Verfahren nach Anspruch 10 durchzuführen.

12. Teilnehmergerät (50), das betriebsfähig ist zum Codieren einer Angabe eines Übertragungsrangs, der für die Kommunikation zwischen dem besagten Teilnehmergerät (50) und einer Basisstation (20) eines drahtlosen Multiple-Input-Multiple-Output-Kommunikationsnetzwerks (10) verwendet wird, und Codieren einer Angabe eines Wunsches nach einer Zuweisung von weiteren Übertragungsverbindungsressourcen, wobei das besagte Teilnehmergerät Folgendes umfasst:
Empfangslogik, die betriebsfähig ist zum Empfangen einer Angabe eines maximalen Übertragungsrangs für die Kommunikation von Daten zwischen dem besagten Teilnehmergerät und der besagten Basisstation;
Bewertungslogik, die betriebsfähig ist zum Bewerten einer Zuweisung von Übertragungsverbindungsressourcen;
Codierungslogik, die betriebsfähig ist zum Codieren, in Abhängigkeit von dem besagten maximalen Rang, einer Angabe eines Übertragungsrangs, der für die Kommunikation von Daten zwischen dem besagten Teilnehmergerät und der besagten Basisstation in der Steuerungskanalsignalisierung, umfassend ein Einzelbit, zu verwenden ist;
und wenn der besagte Übertragungsrang, der für die Kommunikation von Daten zwischen dem besagten Teilnehmergerät, und der besagten Basisstation zu verwenden ist, größer als, eins ist, zum Codieren, ob sich das besagte Teilnehmergerät eine Zuweisung von weiteren Übertragungsverbindungsressourcen in der Steuerungskanalsignalisierung, umfassend ein weiteres Einzelbit, wünscht; und
Mitteilungslogik, die betriebsfähig ist zum Mitteilen des besagten Einzelbits und des besagten weiteren Bits an die besagte Basisstation.

## Revendications

1. Procédé pour une station de base permettant d'interpréter une signalisation de canal de contrôle entre un équipement d'utilisateur et la station de base d'un réseau de communication sans fil à entrée multiple sortie multiple, ledit procédé comprenant les étapes suivantes :
déterminer un rang de transmission maximum pour la communication de données entre ledit équipement d'utilisateur et ladite station de base ;
communiquer ledit rang de transmission maximum déterminé audit équipement d'utilisateur ;
recevoir une transmission de signalisation de canal de contrôle en provenance dudit équipement d'utilisateur comprenant un bit unique ;
interpréter à partir dudit bit unique et dudit rang de transmission maximum un rang de transmission qui est utilisé pour la communication de données entre ledit équipement d'utilisateur et ladite station de base ; et,
si ledit rang de transmission qui est utilisé pour la communication de données entre ledit équipement d'utilisateur et ladite station de base est interprété comme étant supérieur à un, interpréter à partir d'un autre bit unique de ladite signalisation de canal de contrôle en provenance dudit équipement d'utilisateur si ledit équipement d'utilisateur souhaite une allocation d'autres ressources de liaison de transmission.

2. Procédé selon la revendication 1, dans lequel ledit bit unique est transmis sur un flux de données primaire.

3. Procédé selon l'une quelconque des revendications précédentes, dans lequel ledit autre bit unique est transmis sur un flux de données secondaire.

4. Procédé selon l'une quelconque des revendications précédentes, dans lequel ladite signalisation de canal de contrôle comprend un E-DPCCH.

5. Procédé selon l'une quelconque des revendications précédentes, dans lequel ledit bit unique comprend un bit satisfait.

6. Procédé selon l'une quelconque des revendications précédentes, dans lequel ledit autre bit unique comprend un bit satisfait.

7. Procédé selon l'une quelconque des revendications précédentes, dans lequel la réception d'une transmission de signalisation de canal de contrôle en provenance dudit équipement d'utilisateur comprend la réception d'un bit unique et d'au moins un bit additionnel, et l'interprétation à partir dudit bit unique et dudit au moins un bit additionnel, d'un rang de transmission qui est utilisé pour la communication de données entre ledit équipement d'utilisateur et ladite station de base.

8. Produit de programme informatique exploitable, lorsqu'il est exécuté sur un ordinateur, pour effectuer le procédé de l'une quelconque des revendications 1 à 7.

9. Station de base (20) exploitable pour interpréter une signalisation de canal de contrôle entre un équipement d'utilisateur (50) et ladite station de base (20) d'un réseau de communication sans fil à entrée multiple sortie multiple (10), ladite station de base (20) comprenant :
une logique de détermination de rang exploitable pour déterminer un rang de transmission maximum pour la communication de données entre ledit équipement d'utilisateur et ladite station de base ;
une logique de communication de rang exploitable pour communiquer ledit rang de transmission maximum déterminé audit équipement d'utilisateur ;
une logique de réception exploitable pour recevoir une transmission de signalisation de canal de contrôle en provenance dudit équipement d'utilisateur comprenant un bit unique ;
une logique d'interprétation exploitable pour interpréter, à partir dudit bit unique et dudit rang de transmission maximum, un rang de transmission qui est utilisé pour la communication de données entre ledit équipement d'utilisateur et ladite station de base ; et,
si ledit rang de transmission qui est utilisé pour la communication de données entre ledit équipement d'utilisateur et ladite station de base est interprété comme étant supérieur à un, interpréter à partir d'un autre bit unique de ladite signalisation de canal de contrôle en provenance dudit équipement d'utilisateur si ledit équipement d'utilisateur souhaite une allocation d'autres ressources de liaison de transmission.

10. Procédé pour un équipement d'utilisateur permettant d'encoder une indication d'un rang de transmission qui est utilisé pour la communication entre ledit équipement d'utilisateur et une station de base d'un réseau de communication sans fil à entrée multiple sortie multiple et d'encoder une indication d'un souhait d'une allocation d'une autre ressource de liaison de transmission, ledit procédé comprenant les étapes suivantes :
recevoir une indication d'un rang de transmission maximum pour la communication de données entre ledit équipement d'utilisateur et ladite station de base ;
estimer une allocation de ressource de liaison de transmission ;
encoder une indication de rang de transmission en fonction dudit rang maximum devant être utilisé pour la communication de données entre ledit équipement d'utilisateur et ladite station de base dans une signalisation de canal de contrôle comprenant un bit unique ;
et si ledit rang de transmission devant être utilisé pour la communication de données entre ledit équipement d'utilisateur et ladite station de base est supérieur à un, encoder si ledit équipement d'utilisateur souhaite une allocation d'une autre ressource de liaison de transmission dans une signalisation de canal de contrôle comprenant un autre bit unique ; et
communiquer ledit bit unique et ledit autre bit à ladite station de base.

11. Produit de programme informatique exploitable, lorsqu'il est exécuté sur un ordinateur, pour effectuer le procédé de la revendication 10.

12. Equipement d'utilisateur (50) exploitable pour encoder une indication d'un rang de transmission qui est utilisé pour la communication entre ledit équipement d'utilisateur (50) et une station de basé (20) d'un réseau de communication sans fil à entrée multiple sortie multiple (10) et encoder une indication d'un souhait d'une allocation d'une autre ressource de liaison de transmission, ledit équipement d'utilisateur comprenant :
une logique de réception exploitable pour recevoir une indication d'un rang de transmission maximum pour la communication de données entre ledit équipement d'utilisateur et ladite station de base ;
une logique d'estimation pour estimer une allocation de ressource de liaison de transmission ;
une logique d'encodage exploitable pour encoder en fonction dudit rang maximum une indication de rang de transmission devant être utilisé pour la communication de données entre ledit équipement d'utilisateur et ladite station de base dans une signalisation de canal de contrôle comprenant un bit unique ;
et si ledit rang de transmission devant être utilisé pour la communication de données entre ledit équipement d'utilisateur et ladite station de base est supérieur à un, pour encoder si ledit équipement d'utilisateur souhaite une allocation d'une autre ressource de liaison de transmission dans une signalisation de canal de contrôle comprenant un autre bit unique ; et
une logique de communication exploitable pour communiquer ledit bit unique et ledit autre bit à ladite station de base.
